(19) Europäisches Patentamt
European Patent Office
Office européen des brevets

(11) **EP 4 713 643 B1**

(12) **EUROPÄISCHE PATENTSCHRIFT**

(45) Veröffentlichungstag und Bekanntmachung des Hinweises auf die Patenterteilung:
**17.06.2026 Patentblatt 2026/25**

(21) Anmeldenummer: **25717000.1**

(22) Anmeldetag: **02.04.2025**

(51) Internationale Patentklassifikation (IPC):
**G01C 21/00** (2006.01) **G01C 21/14** (2006.01)
**G01C 21/30** (2006.01)

(52) Gemeinsame Patentklassifikation (CPC):
**G01C 21/14; G01C 21/30; G01S 19/14; G01S 19/20**

(86) Internationale Anmeldenummer:
**PCT/EP2025/058988**

(87) Internationale Veröffentlichungsnummer:
**WO 2025/223801 (30.10.2025 Gazette 2025/44)**

(54) **VERFAHREN ZUM KONFIGURIEREN EINES GNSS-INTEGRITÄTSMONITORS UND FAHRZEUG**

METHOD FOR CONFIGURING A GNSS INTEGRITY MONITOR, AND VEHICLE

PROCÉDÉ POUR CONFIGURER UN MONITEUR D'INTÉGRITÉ GNSS ET VÉHICULE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **25.04.2024 DE 102024001346**

(43) Veröffentlichungstag der Anmeldung:
**25.03.2026 Patentblatt 2026/13**

(73) Patentinhaber: **Mercedes-Benz Group AG**
**70372 Stuttgart (DE)**

(72) Erfinder: **RIES, Florian**
**70599 Stuttgart (DE)**

(74) Vertreter: **Novagraaf Group**
**Chemin de l'Echo 3**
**1213 Onex / Geneva (CH)**

(56) Entgegenhaltungen:
**EP-A1- 3 839 568      US-A1- 2009 228 204**
**US-A1- 2021 215 503**

• JING HAO ET AL: "Integrity Monitoring of GNSS/ INS Based Positioning Systems for Autonomous Vehicles: State-of-the-Art and Open Challenges", IEEE TRANSACTIONS ON INTELLIGENT TRANSPORTATION SYSTEMS, IEEE, PISCATAWAY, NJ, USA, vol. 23, no. 9, 1 September 2022 (2022-09-01), pages 14166 - 14187, XP011919720, ISSN: 1524-9050, [retrieved on 20220308], DOI: 10.1109/TITS.2022.3149373

**Beschreibung**

Die Erfindung betrifft ein Verfahren zum Konfigurieren eines GNSS-Integritätsmonitors nach der im Oberbegriff von Anspruch 1 näher definierten Art sowie ein Fahrzeug zur Durchführung des Verfahrens.

Mit Hilfe von globalen Navigationssatellitensystemen (GNSS) wie beispielsweise GPS, Galileo oder dergleichen, ist eine vergleichsweise genaue Positionsbestimmung auf der Erde möglich. Ein entsprechender Satellitenempfänger benötigt dabei zur Positionsbestimmung den Empfang der Signale von mindestens vier Satelliten. Die jeweiligen Satelliten teilen dem Empfänger über die Signale ihre Position und eine Zeitinformation mit. Die Überlagerung verschiedener Messungenauigkeiten führt dazu, dass die Aufenthaltsposition des Satellitenempfängers auf der Erde nicht exakt, sondern mit einer Wahrscheinlichkeit innerhalb eines bestimmten Bereichs liegend ermittelbar ist. Dieser Bereich setzt sich aus der exakten Aufenthaltsposition und einem Ortsfehler zusammen. Der Ortsfehler kann in der Größenordnung von einigen wenigen Zentimetern oder Metern liegen.

Es gibt die unterschiedlichsten Anwendungsbereiche, in der die satellitengestützte Positionsbestimmung eingesetzt wird. Je nach Anwendungsbereich unterliegt die satellitengestützte Positionsbestimmung unterschiedlichsten Anforderungen an die Positionsgenauigkeit. Die satellitengestützte Positionsbestimmung ist beispielsweise zur Freigabe oder Sperrung von Fahrerassistenzsystemen, insbesondere im Zuge des automatisierten oder autonomen Fahrens, von Bedeutung. So sind beispielsweise hochautomatisierte Fahrsysteme typischerweise für einen bestimmten Anwendungsbereich, auch als Operational Design Domain (ODD) bezeichnet, zugelassen. So darf beispielsweise ein Spurhalte- oder Spurwechselassistent nur auf einer geeigneten Autobahn und ein Parkplatzpilot auf einem Parkplatz bereitgestellt werden. Die Grenzen dieser Operational Design Domains lassen sich geografisch abstecken und werden daher oftmals in hochgenauen digitalen Straßenkarten verzeichnet. Hierzu können sogenannte Geozäune, auch als Geofence bezeichnet, in der digitalen Straßenkarte hinterlegt werden. Das Freigeben oder Sperren von Fahrzeugfunktionen unter Berücksichtigung von Geozäunen erfordert eine vergleichsweise genaue satellitengestützte Positionsbestimmung.

Es ist entsprechend notwendig die Positionsbestimmungsgenauigkeit der satellitengestützten Positionsbestimmung in der jeweiligen Fahrsituation zu ermitteln. Hierzu ist es bekannt ein sogenanntes Integritätsmonitoring durchzuführen. Ein bekanntes Verfahren hierzu ist das sogenannte Receiver Autonomous Integrity Monitoring (RAIM). Kann ein Satellitenempfänger die Signale von mindestens vier Satelliten empfangen, ist eine Positionsbestimmung durch die Analyse einer Zeitinformation sowie drei Rauminformationen möglich. Mit Hilfe eines von einem fünften Satelliten empfangenen Signals lässt sich darüber hinaus feststellen, ob einer der Satelliten falsch gemessen wird. Dies wird auch als Fault Detection (FD) bezeichnet. Unter Berücksichtigung eines sechsten Satellitensignals lässt sich zudem feststellen, welcher der Satelliten fehlerhaft gemessen wird. Dieses Vorgehen wird als Fault Detection and Exclusion (FDE) bezeichnet. In der Realität kann es zur Sicherstellung einer ausreichenden Positionsgenauigkeit erforderlich sein das Signal von noch mehr Satelliten zu empfangen, beispielsweise wenn mehrere Satelliten in der gleichen Raumebene liegen.

Der Aufenthaltswahrscheinlichkeitsbereich des Satellitenempfängers bzw. der bei einer Messung aktuell vorliegende "GNSS-Fehler" wird auch als Protection-Limit (PL) bezeichnet. Ein GNSS-Integritätsmonitor kann den aktuellen GNSS-Fehler mit einem von der Fahrsituation abhängigen tolerierten GNSS-Fehler vergleichen. Der tolerierte GNSS-Fehler wird auch als Alert-Limit (AL) bezeichnet. Zur Freigabe oder Sperrung von Fahrerassistenzfunktionen bzw. Fahrerassistenzsystemen unter Berücksichtigung von Geozäunen, ist der Ausdehnungsbereich des Alert-Limits so festzulegen, dass eine eindeutige Aussage gemacht werden kann, auf welcher Straße sich das Fahrzeug aktuell befindet. Ist das Protection-Limit also kleiner als das Alert-Limit, so wird der GNSS-Integritätsmonitor ein gültiges bzw. positives Ergebnis liefern. Ist hingegen das Protection-Limit größer als das Alert-Limit, so wird der GNSS-Integritätsmonitor ein ungültiges bzw. negatives Ergebnis liefern. Liegt ein negatives Ergebnis vor, so werden die jeweiligen Fahrerassistenzfunktionen gesperrt.

Es ist wünschenswert entsprechende Fahrerassistenzfunktionen so häufig wie möglich bereitstellen zu können. Dabei besteht das Risiko, dass sich das Fahrzeug auf einem Straßenabschnitt aufhält, auf dem gemäß des entsprechenden Geozauns generell die Freigabe der Fahrerassistenzfunktion erlaubt ist, aufgrund einer zu ungenauen Positionsbestimmung jedoch nicht sicher ausgeschlossen werden kann, dass sich das Fahrzeug nicht doch auf einer anderen Straße aufhält. Ein entsprechender Kartenanbieter von digitalen Straßenkarten kann nämlich nicht garantieren, dass neben einer in der digitalen Straßenkarte verzeichneten Straße in der Realität eine in der digitalen Straßenkarte nicht hinterlegte Parallelstraße liegt. Es besteht also immer das Risiko, dass die entsprechende digitale Straßenkarte nicht vollständig bzw. veraltet ist. Auf dieser Parallelstraße könnte der Gebrauch der Fahrerassistenzfunktion verboten sein. Um einen Aufenthalt des Fahrzeugs auf einer solchen hypothetisch angenommenen Parallelstraße auszuschließen wären sehr hochwertige und damit teure GNSS-Systeme erforderlich. Durch die Integration solcher Systeme in Fahrzeuge steigen jedoch deren Herstellungskosten. Zudem besteht auch hier das Risiko, dass, beispielsweise weil zu wenige Navigationssatelliten in Kommunikationsreichweite sind, ein großer GNSS-Fehler vorliegt.

Diese Prämisse führt dazu, dass die ansonsten nutzbare Fahrerassistenzfunktion gesperrt bleibt. Somit entsteht der Bedarf Mittel bereitzustellen, mit deren Hilfe die Verfügbarkeit entsprechender Fahrerassistenzfunktionen gesteigert werden kann.

Aus der DE 10 2019 200 423 A1 ist ein Verfahren zum Bereitstellen eines Integritätsbereichs einer Parameterschätzung bekannt. Dabei wird eine Integritätsinformation auf Basis von GNSS-Daten, GNSS-Korrekturdaten und unter Berücksichtigung von Sensordaten, die von einem Fahrzeug mittels einer Umfeldsensorik generierte werden, ermittelt. Diese Integritätsinformation liegt in einer rotationsvarianten Form, also in einer nicht-rotationsinvarianten Form vor. Bei der Integritätsinformation kann es sich um den Aufenthaltswahrscheinlichkeitsbereich des Fahrzeugs in einer digitalen Straßenkarte handeln. Der Aufenthaltswahrscheinlichkeitsbereich kann dabei die Form einer Ellipse annehmen.

Die Nichtpatentliteratur JING HAO ET AL: "Integrity Monitoring of GNSS/INS Based Positioning Systems for Autonomous Vehicles: State-of-the-Art and Open Challenges", siehe IEEE TRANSACTIONS ON INTELLIGENT TRANSPORTATION SYSTEMS, IEEE, PISCATAWAY, NJ, USA, Bd. 23, Nr. 9, 1. September 2022 (2022-09-01), Seiten 14166-14187, XP011919720, ISSN: 1524-9050, DOI: 10.1109/TITS.2022.3149373 [gefunden am 2022-03-08], offenbart einen Überblick über den Stand der Technik zur Integritätsüberwachung von Positionierungssystemen. Diese Überwachung dient der Bewertung der Zuverlässigkeit und Vertrauenswürdigkeit von Navigationsdaten, die von GNSS- und INS-Systemen in autonomen Fahrzeugen bereitgestellt werden. Es werden Verfahren beschrieben, die Parameter wie Schutzlevel und Alarmgrenze nutzen, um Fehler in den Navigationsdaten zu erkennen und die Sicherheit zu gewährleisten.

Die EP 3 839 568 A1 beschreibt ein Verfahren zur Bestimmung einer posterioren Fehlerwahrscheinlichkeitsverteilung für eine von einem GNSS-Empfänger gemessene Größe. Hierfür wird ein multivariates Wahrscheinlichkeitsverteilungsmodell verwendet. In dieses Modell werden Werte für einen oder mehrere GNSS-Messqualitätsindikatoren eingegeben, um die posteriore Fehlerwahrscheinlichkeitsverteilung für die GNSS-Messung zu bestimmen und daraus ein Schutzlevel (Protection Level) zu berechnen.

Die US 2009/0228204 A1 offenbart ein System und ein Verfahren zum Kartenabgleich (Map Matching) mit sensordetektierten Objekten. Dabei werden bordeigene Fahrzeugsensoren verwendet, um Objekte in der Umgebung zu erfassen. Diese erfassten Objekte werden dann mit Objektdaten verglichen, die in einer digitalen Karte gespeichert sind, um die Positionsschätzung des Fahrzeugs zu verfeinern.

Aus der US 2021/0215503 A1 ist ein Verfahren zur Steuerung eines Fahrzeugsystems bekannt, das für die Durchführung eines automatisierten Fahrbetriebs ausgerüstet ist. Hierbei wird das Fahrzeug mit mindestens zwei unterschiedlichen Lokalisierungsverfahren lokalisiert, die ein landmarkenbasiertes Lokalisierungsverfahren und ein auf einem globalen Navigationssatellitensystem basierendes Verfahren umfassen. Das Fahrzeugsystem wird nur dann zur Aktivierung freigegeben, wenn mit jedem der angewendeten Lokalisierungsverfahren bestätigt wird, dass sich das Fahrzeug auf einem für den automatisierten Fahrbetrieb freigegebenen Streckenabschnitt befindet.

Der vorliegenden Erfindung liegt die Aufgabe zugrunde ein verbessertes Verfahren zum Konfigurieren eines GNSS-Integritätsmonitors anzugeben, mit dessen Hilfe es möglich ist, die Häufigkeit, mit der der GNSS-Integritätsmonitor ein positives Ergebnis liefert, erhöht werden kann, wobei dabei gleichzeitig das Einhalten der zugrunde liegende Sicherheitsanforderungen gewährleistet bleibt.

Diese Aufgabe durch ein Verfahren zum Konfigurieren eines GNSS-Integritätsmonitors mit den Merkmalen des Anspruchs 1 gelöst. Vorteilhafte Ausgestaltungen und Weiterbildungen sowie ein Fahrzeug zur Durchführung des Verfahrens ergeben sich aus den hiervon abhängigen Ansprüchen.

Ein gattungsgemäßes Verfahren zum Konfigurieren eines GNSS-Integritätsmonitors im Rahmen der Verortung eines Fahrzeugs auf einer Straße, wobei eine Recheneinheit durch Analyse einer von einem navigationssatellitengestützten Navigationssystem ermittelten GNSS-Position und von durch eine Erfassung des Umfelds des Fahrzeugs mit einer fahrzeugeigenen Umfeldsensorik ermittelten Straßenattributen ein Aufenthaltswahrscheinlichkeitsbereich für das Fahrzeug auf der Straße bestimmt, wird durch die folgenden Verfahrensschritte weitergebildet:

- ermitteln einer vom Fahrzeug befahrenen Straße in einer digitalen Straßenkarte in Übereinkunft mit der GNSS-Position;
- Laden der in der digitalen Straßenkarte der respektiven Straße zugeordneten Straßenattributen;
- Ermitteln einer Querposition des Fahrzeugs auf der Straße durch einen Abgleich der aus der digitalen Straßenkarte ausgelesenen Straßenattributen und den aus der Erfassung des Umfelds mittels der Umfeldsensorik abgeleiteten Straßenattributen;
- Berechnen eines maximal zulässigen GNSS-Fehlers derart, dass unter Berücksichtigung der ermittelten Querposition ein Aufenthalt des Fahrzeugs auf einer möglichen Parallelstraße ausschließbar ist; und
- Einstellen eines zulässigen GNSS-Integritätsmonitors für die Recheneinheit, wobei derjenige GNSS-Integritätsmonitor aus einer in der Recheneinheit vorgehaltenen Konfigurationsliste verfügbarer GNSS-Integritätsmonitore ausgewählt wird, dessen tolerierter GNSS-Fehler maximal so groß ist wie der maximal zulässige GNSS-Fehler.

Das Verfahren erlaubt es den tolerierten GNSS-Fehler, also das Alert-Limit, situationsbedingt zu vergrößern, sodass der entsprechende GNSS-Integritätsmonitor häufiger einen positiven Wert ausgeben wird. Dies kann vorteilhaft dazu genutzt werden die Verfügbarkeit von Fahrerassistenzfunktionen zu verbessern, worauf später noch näher eingegangen wird.

Die Recheneinheit und das Navigationssystem können dabei als gemeinsames Gerät ausgebildet sein oder auch separat zueinander ausgeführt sein. Die Recheneinheit und das Navigationssystem können beide fahrzeugintegriert ausgebildet sein. Die Recheneinheit oder das Navigationssystem kann auch extern zum Fahrzeug ausgeführt sein und somit als entsprechendes Mobilgerät bezeichnet werden.

Das Fahrzeug kann die verschiedensten Sensorsysteme zur Ausbildung der Umfeldsensorik aufweisen, wie beispielsweise eine oder mehrere Mono- oder Stereokameras, Laserscanner wie ein LiDAR, Ultraschallsensoren, Radarsensoren und dergleichen. Mit Hilfe solcher Sensoren lassen sich zum einen Tiefeninformationen generieren, die es ermöglichen Relativabstände zu in der Nähe des Fahrzeugs befindlichen Objekten zu ermitteln. So kann beispielsweise der laterale Abstand des Fahrzeugs zu einer den Fahrbahnrand abgrenzenden baulichen Trennung ermittelt werden. Zum anderen können Umgebungsobjekte visuell erkannt und klassifiziert werden. So können beispielsweise in Kamerabildern Fahrspurmarkierungen erkannt und identifiziert werden.

Zuerst ermittelt das Fahrzeug bzw. die Recheneinheit unter Berücksichtigung der vom Navigationssystem ermittelten GNSS-Position auf welcher Straße sich das Fahrzeug in der digitalen Straßenkarte befindet. Unter Berücksichtigung des derzeit vorliegenden Aufenthaltswahrscheinlichkeitsbereichs und des Straßenverlaufs des Straßennetzes kann dabei lediglich eine einzige Straße für den Aufenthalt des Fahrzeugs infrage kommen. Es ist jedoch auch möglich, dass in der digitalen Straßenkarte eine Parallelstraße parallel zur ermittelten Straße verläuft. Auch ist es denkbar, da dies aufgrund der Aktualität der digitalen Straßenkarte nicht ausgeschlossen werden kann, dass eine in der digitalen Straßenkarte nicht vermerkte Parallelstraße vorhanden ist. Zum jetzigen Zeitpunkt liegt also noch keine Information vor, ob die in diesem Verfahrensschritt ausgewählte Straße tatsächlich derjenigen Straße entspricht, auf der sich das Fahrzeug wirklich fortbewegt.

Die Recheneinheit legt die vom Fahrzeug befahrene Straße fest. Überlappt sich der Aufenthaltswahrscheinlichkeitsbereich des Fahrzeugs mit mehreren Straßen in der digitalen Straßenkarte, so kann beispielsweise diejenige Straße als die vom Fahrzeug befahrene Straße ausgewählt werden, die am mittigsten durch den Aufenthaltswahrscheinlichkeitsbereich führt. Nun liest die Recheneinheit aus der digitalen Straßenkarte die dieser Straße zugeordneten Straßenattribute aus. Zu diesen Straßenattributen zählt insbesondere die Straßenbreite, Fahrspurbreite, Fahrspuranzahl, das Vorhandensein und insbesondere der Verlauf einer baulichen Trennung zwischen zueinander benachbarten Straßen und dergleichen.

Mit Hilfe seiner Umfeldsensorik ermittelt das Fahrzeug dann die tatsächlich in der aktuellen Fahrsituation vorliegenden Straßenattribute und vergleicht diese mit den aus der digitalen Straßenkarte ausgelesenen Straßenattributen. Durch die Auswertung beispielsweise entsprechender LiDAR-Sensordaten und/oder Kamerabilder kann beispielsweise das Fahrzeug ermitteln, dass es sich auf einer zweispurigen Straße auf der linken Fahrspur befindet und dabei einen lateralen Abstand von 50 cm zu einer links liegenden, durchgezogen ausgeführten Fahrspurmarkierung aufweist. Somit kann vornherein der Aufenthalt des Fahrzeugs auf der rechten Fahrspur ausgeschlossen werden, da bei einem Aufenthalt des Fahrzeugs auf der rechten Fahrspur links des Fahrzeugs eine unterbrochene Linie verlaufen würde und die durchgezogene Fahrspurmarkierung rechts verlaufen würde.

Das Ermitteln der Querposition des Fahrzeugs geht dabei ebenfalls mit einer gewissen Ungenauigkeit einher. So kann beispielsweise aufgrund des Messfehlers eines LiDAR-Sensors der laterale Abstand einen Fehler in der Größenordnung von einigen Zentimetern aufweisen. Durch die Sensorfusion mehrerer Umfeldsensoren lässt sich dabei Querpositionsgenauigkeit verbessern.

Im nächsten Schritt berechnet das Fahrzeug bzw. die Recheneinheit den maximal zulässigen GNSS-Fehler. Der maximal zulässige GNSS-Fehler wird dabei so groß wie möglich festgelegt, unter der Prämisse, dass sich das Fahrzeug unter Berücksichtigung der ermittelten Querposition nicht auf einer angrenzenden tatsächlich vorhandenen oder angenommenen Parallelstraße befindet. Hierzu wird generell die Existenz entsprechender Parallelstraßen angenommen. Ermittelt beispielsweise das Fahrzeug, dass es in einer linken Fahrspur fährt, so darf der maximal zulässige GNSS-Fehler so groß sein, wie der laterale Abstand des Fahrzeugs bis zur entsprechenden linken Fahrspur der Parallelstraße.

In der Recheneinheit, bzw. wenn das Navigationssystem und die Recheneinheit in ein gemeinsames Gerät integriert sind, im Navigationssystem, werden erfindungsgemäß mehrere unterschiedliche GNSS-Integritätsmonitore vorgehalten. Jeder GNSS-Integritätsmonitor weist einen individuellen tolerierten GNSS-Fehler auf. Beispielsweise können vier GNSS-Integritätsmonitore vorgehalten werden, deren tolerierter GNSS-Fehler beispielsweise bei vier Metern, acht Metern, zwölf Metern und sechzehn Metern liegt. Wird dann beispielsweise als maximal zulässiger GNSS-Fehler neun Meter ermittelt, so wird der nächstkleinere GNSS-Integritätsmonitor zur Anwendung ausgewählt, hier also in diesem Falle derjenige GNSS-Integritätsmonitor, dessen tolerierter GNSS-Fehler bei acht Metern liegt.

Der aktuelle GNSS-Fehler ist unabhängig von der Konfiguration der Recheneinheit bzw. des Navigationssystems und ergibt sich aus der jeweiligen Messsituation. Wird also ein größerer tolerierter GNSS-Fehler angenommen, so wird auch öfter der entsprechende GNSS-Integritätsmonitor ein positives Ergebnis ausgeben. Da dank des erfindungsgemäßen Verfahrens der Aufenthalt des Fahrzeugs auf einer hypothetischen Parallelstraße ausgeschlossen ist, können die zugrunde liegenden Sicherheitsanforderungen trotz Festlegung eines größeren tolerierten GNSS-Fehlers als erfüllt angesehen werden. So ist nämlich sichergestellt, dass sich das Fahrzeug auch tatsächlich auf der relevanten Straße befindet.

Das erfindungsgemäße Verfahren sieht dabei vor, dass der maximal zulässige GNSS-Fehler berechnet wird durch Addieren der Breite der vom Fahrzeug befahrenen Straße und eines vorgegebenen Mindestabstands zu einer real vorhandenen oder hypothetisch neben der Straße liegenden Parallelstraße und anschließendes Subtrahieren der zweifachen Querpositionsgenauigkeit von dem Ergebnis der Addition, wobei die Querpositionsgenauigkeit die Genauigkeit der Bestimmung der Querposition in Form einer Länge angibt. Somit ist eine konkrete Rechenvorschrift angegeben, mit der der maximal zulässige GNSS-Fehler durch die Recheneinheit berechnet werden kann. Die Breite der Straße kann dabei aus der digitalen Straßenkarte ausgelesen werden und/oder mittels der Umfeldsensorik ermittelt werden. Liegen in der digitalen Straßenkarte Parallelstraßen neben derjenigen Straße auf der der Aufenthalt des Fahrzeugs angenommen wird, so handelt es sich um eine real vorhandene Parallelstraße. In diesem Falle kann der Mindestabstand dem aus der digitalen Straßenkarte ausgelesenen Abstand zwischen der Straße und der Parallelstraße entsprechen. Kann hingegen in der digitalen Straßenkarte keine Parallelstraße ermittelt werden, so wird von einer hypothetisch vorhandenen Parallelstraße ausgegangen. In diesem Falle kann ein fest vorgegebener Mindestabstand berücksichtigt werden, wie beispielsweise drei Meter.

Zur Berechnung der Querposition kann es dabei ausreichen, lediglich auf einer Seite der Straße die Existenz einer Parallelstraße festzustellen oder anzunehmen. Vorteilhafterweise kann die Existenz einer Parallelstraße jedoch auch sowohl auf der linken, als auch auf der rechten Seite der Straße bestätigt bzw. angenommen werden. Beträgt dann der laterale Abstand der Straße zu einer real vorhandenen und links neben der Straße verlaufenden Parallelstraße vier Meter und beträgt der laterale Abstand zu einer hypothetisch rechts neben der Straße angenommenen Parallelstraße drei Meter, so wird der maximal zulässige GNSS-Fehler zu derjenigen Parallelstraße ermittelt, die näher an der vom Fahrzeug befahrenen Straße liegt. In diesem Beispiel würde also als Mindestabend 3 Meter festgelegt werden und der maximal zulässige GNSS-Fehler zur rechts neben der Straße liegenden hypothetisch angenommenen Parallelstraße ermittelt.

Entsprechend einer weiteren vorteilhaften Ausgestaltung des erfindungsgemäßen Verfahrens ist es ferner vorgesehen, dass die Recheneinheit ein Steuersignal an ein Fahrerassistenzsystem ausgibt, wenn der ermittelte aktuelle GNSS-Fehler größer ist, als der maximal zulässige GNSS-Fehler und/oder der ermittelte aktuelle GNSS-Fehler größer ist, als der vom aktuell konfigurierten GNSS-Integritätsmonitor tolerierte GNSS-Fehler. Bei dem Steuersignal kann es sich entsprechend um das positive bzw. negative Ergebnis des GNSS-Integritätsmonitors handeln. Unter Berücksichtigung des Steuersignals können dann jeweilige Fahrerassistenzfunktionen freigegeben oder gesperrt werden. Beispielsweise kann eine teilautomatisierte oder gar autonome Fahrfunktion somit freigegeben werden, wenn das Steuersignal bzw. das Ergebnis des GNSS-Integritätsmonitors positiv ist und die jeweilige Fahrfunktion gesperrt werden, wenn das Steuersignal negativ ist.

Eine weitere vorteilhafte Ausgestaltung des erfindungsgemäßen Verfahrens sieht ferner vor, dass die Recheneinheit ein Steuersignal an ein Fahrerassistenzsystem ausgibt, wenn keine Querposition ermittelt werden kann oder eine Differenz zwischen der ermittelten GNSS-Position und der Querposition größer ist als ein vorgegebener Schwellenwert. Hierdurch wird ein zusätzlicher Sicherheitsmechanismus bereitgestellt. Es kann zu einer Situation kommen, in der keine Querposition ermittelt werden kann. Dies ist beispielsweise dann der Fall, wenn keine Übereinkunft zwischen den durch die fahrzeugeigene Umfeldsensorik ermittelten Straßenattributen und den aus der vom Fahrzeug befahrenen Straße in der digitalen Straßenkarte ausgelesenen Straßenattributen ermittelt werden kann. Aus der digitalen Straßenkarte kann beispielsweise ausgelesen werden, dass sich das Fahrzeug auf einer zweispurigen Fahrbahn in der rechten Fahrspur befindet. Durch die Analyse der mittels der Umfeldsensorik generierten Daten stellt das Fahrzeug hingegen fest, dass es sich auf einer einspurigen Fahrbahn befindet. Es kann also keine mittlere Fahrspurmarkierung detektiert werden. Zudem kann eine abweichende Straßenbreite ermittelt werden. Somit besteht ein besonders hohes Risiko, dass sich das Fahrzeug tatsächlich auf einer anderen Straße befindet, als ursprünglich angenommen. Entsprechend gibt die Recheneinheit ein Steuersignal zum Sperren der entsprechenden Fahrerassistenzfunktion aus.

Die ermittelte GNSS-Position wird typischerweise dem Mittelpunkt des Aufenthaltswahrscheinlichkeitsbereichs entsprechen. Unter Berücksichtigung der GNSS-Position kann ebenfalls eine Querposition, also eine laterale Position, auf der Straße ermittelt werden. Die Querposition und die GNSS-Position können bezüglich der lateralen Positionierung des Fahrzeugs auf der Straße miteinander verglichen werden. Wird hier ein Unterschied festgestellt, der größer als der vorgegebene Schwellenwert ist, so kann ebenfalls die Recheneinheit die Bereitstellung entsprechender Fahrerassistenzfunktionen unterbinden. Der vorgegebene Schwellenwert kann eine von der Fahrsituation abhängige Höhe aufweisen, wie beispielsweise ein Meter, fünf Meter, zehn Meter oder auch Bruchteile oder Vielfache hiervon.

Entsprechend einer weiteren vorteilhaften Ausgestaltung des erfindungsgemäßen Verfahrens ist es ferner vorgesehen, dass zumindest eine der folgenden Größen als Straßenattribut berücksichtigt wird:

- wenigstens eine Fahrbahnmarkierung, insbesondere eine Fahrspurmarkierung;
- wenigstens eine Fahrbahnbegrenzung; und/oder
- wenigstens eine für einen im Umfeld des Fahrzeugs erkannten weiteren Verkehrsteilnehmer ermittelte Bewegungstrajektorie.

Somit sind vielfältige Möglichkeiten zur Ermittlung der Querposition durch einen Vergleich der aus der digitalen Straßenkarte ausgelesenen und den von der Umfeldsensorik gelieferten Informationen gegeben. Je mehr unterschiedliche Straßenattribute miteinander abgeglichen werden, desto zuverlässiger und damit genauer lässt sich die Querposition bestimmen. Wird die Bewegungstrajektorie von weiteren Verkehrsteilnehmern als Straßenattribut berücksichtigt, so kann als korrespondierender Wert in der digitalen Straßenkarte hierzu beispielsweise die Mittellinie einer entsprechenden Fahrspur verwendet werden. Die Bewegungstrajektorien von weiteren Verkehrsteilnehmern wie beispielsweise Radfahrern, Motorradfahren, Pkws, Lkws und dergleichen, können also ein Indiz für den Fahrspurverlauf darstellen. Zur Ermittlung der Bewegungstrajektorie von weiteren Verkehrsteilnehmern kann das Fahrzeug andere Fahrzeuge sensorisch erfassen und den Relativabstand zu diesen Fahrzeugen über der Zeit nachverfolgen.

Eine weitere vorteilhafte Ausgestaltung des erfindungsgemäßen Verfahrens sieht ferner vor, dass die Recheneinheit zur Bestimmung des ermittelten aktuellen GNSS-Fehlers die Anzahl der globalen Navigationssatelliten, von denen innerhalb einer vom jetzigen Zeitpunkt an rückwärts laufenden ersten Zeitdauer ein Signal empfangen wurde und/oder dem Empfang von GNSS-Korrekturdaten, die nicht älter als eine zweite Zeitdauer sind, berücksichtigt. Je größer die Anzahl der Navigationssatelliten ausfällt, von denen innerhalb der ersten Zeitdauer ein Signal empfangen wurde, desto genauer lässt sich auch die GNSS-Position bestimmen und desto geringer fällt der aktuelle GNSS-Fehler aus. Zudem hängt die Höhe des aktuellen GNSS-Fehlers von der Qualität der GNSS-Korrekturdaten ab. Je aktueller und umfangreicher die GNSS-Korrekturdaten sind, desto genauer lässt sich auch die GNSS-Position bestimmen.

Entsprechend einer weiteren vorteilhaften Ausgestaltung des erfindungsgemäßen Verfahrens ist es ferner vorgesehen, dass die Recheneinheit durch Analyse von mittels der Umfeldsensorik generierter Sensordaten für das Umfeld des Fahrzeugs charakteristische Umgebungsmerkmale bestimmt und diese mit ortsspezifisch in einer Datenbank gespeicherten bekannten Umgebungsmerkmalen abgleicht, um eine für den Aufenthaltsort des Fahrzeugs repräsentative Umgebungsmerkmal-Position zu bestimmen, und die Umgebungsmerkmal-Position zur Validierung oder Widerlegung des Aufenthalts des Fahrzeugs auf einer Parallelstraße oder einer hypothetischen Parallelstraße verwendet. Hierbei handelt es sich um einen weiteren Sicherheitsmechanismus, um den Aufenthalt des Fahrzeugs auf einer Parallelstraße auszuschließen. Dabei werden als Umgebungsmerkmale andere Merkmale verwendet, als im Zuge der Ermittlung der Querposition. Beispielsweise können zur Ermittlung der Querposition die Existenz und der Verlauf von Fahrbahnmarkierungen und Fahrbahnbegrenzungen berücksichtigt werden. Als Umgebungsmerkmale zur Ermittlung der Umgebungsmerkmal-Position können dann beispielsweise Verkehrszeichen, Vegetation wie Bäume, Häuser und dergleichen berücksichtigt werden. Der Ort an den sich die entsprechenden Umgebungsmerkmale befinden sowie ihre jeweiligen geometrischen Ausdehnungen und/oder das visuelle Erscheinungsbild sind in der Datenbank gespeichert. Diese Datenbank kann im Fahrzeug vorgehalten werden oder auch extern hierzu ausgeführt sein. Beispielsweise kann die Datenbank auf einer zentralen Recheneinrichtung bzw. einem Server vorgehalten werden. Das Fahrzeug kann mit der zentralen Recheneinrichtung über eine drahtlose Kommunikationsschnittstelle kommunizieren. Die Datenbank könnte auch in die digitale Straßenkarte integriert sein. Beispielsweise kann aus der Datenbank ausgelesen werden, dass sich das Fahrzeug aktuell auf einer Allee befindet. Entsprechend müssten am linken und rechten Fahrbahnrand Bäume aufgefunden werden. Können in entsprechenden vom Fahrzeug generierten Kamerabildern jedoch keine Bäume erkannt werden, so ist dies ein Indiz für einen Aufenthalt des Fahrzeugs auf einer Parallelstraße. In der Datenbank kann beispielsweise die Position von Verkehrszeichen hinterlegt sein. Durch die Analyse der mit der Umfeldsensorik generierter Sensordaten lässt sich die Relativposition des Fahrzeugs gegenüber diesen Verkehrszeichen bestimmen. So kann der Aufenthaltsort des Fahrzeugs in Form der Umgebungsmerkmal-Position ermittelt werden. Fällt die Umgebungsmerkmal-Position mit der im vorigen ermittelten Querposition bzw. der GNSS-Position zusammen, so wird der Aufenthalt des Fahrzeugs auf der Straße validiert. Kommt es hingegen zu Abweichungen, so wird der Aufenthalt des Fahrzeugs auf der Straße widerlegt. Ermittelt das Fahrzeug, dass es sich auf der Straße aufhält, so ist dies entsprechend einer Widerlegung des Aufenthalts auf der Parallelstraße und umgekehrt.

Bei einem Fahrzeug, umfassend ein Navigationssystem, eine Umfeldsensorik und eine Recheneinheit, sind erfindungsgemäß das Navigationssystem, die Umfeldsensorik und die Recheneinheit zur Ausführung eines im vorigen beschriebenen Verfahrens eingerichtet.

Bei dem Fahrzeug kann es sich um beliebiges Straßenfahrzeug wie einen Pkw, Lkw, Transporter, Bus oder dergleichen handeln. Das Navigationssystem und die Recheneinheit können dabei in ein gemeinsames Gerät integriert sein oder auch separat zueinander ausgeführt sein. Die im vorigen beschriebenen von der Recheneinheit ausgeführten Verfahrensschritte können dabei auch durch mehrere separat zueinander ausgeführte Computersysteme, beispielsweise ein Steuergerät eines Fahrzeuguntersystems und ein zentraler Bordcomputer, ausgeführt werden.

Weitere vorteilhafte Ausgestaltungen des erfindungsgemäßen Verfahrens zum Konfigurieren eines GNSS-Integritätsmonitors sowie des erfindungsgemäßen Fahrzeugs ergeben sich aus den Ausführungsbeispielen, welche nachfolgend unter Bezugnahme auf die Figuren näher beschrieben werden.

Dabei zeigen:

Fig.1    eine schematische Draufsicht auf ein erfindungsgemäßes Fahrzeug;

Fig. 2   eine schematische Darstellung einer möglichen Aufenthaltsposition des in Fig. 1 gezeigten Fahrzeugs auf einer Straße; und

Fig.3    eine schematische Darstellung eines Verfahrensablaufs zur Ermittlung eines maximal zulässigen GNSS-Fehlers.

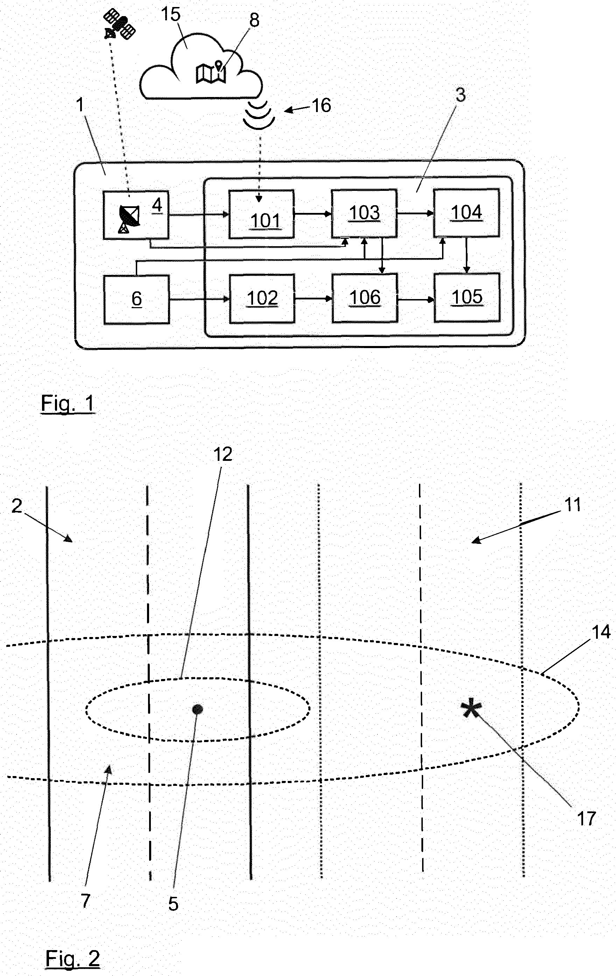

Figur 1 zeigt in einer schematischen Darstellung eine Draufsicht auf ein erfindungsgemäßes Fahrzeug 1. Das Fahrzeug 1 verfügt über ein Navigationssystem 4, eine Umfeldsensorik 6 sowie eine Recheneinheit 3. Die Recheneinheit 3 bzw. das Navigationssystem 4 hat Zugriff auf eine digitale Straßenkarte 8. In dem in Figur 1 gezeigten Ausführungsbeispiel wird die digitale Straßenkarte 8 auf einer zum Fahrzeug 1 extern ausgeführten zentralen Recheneinrichtung 15 vorgehalten. Bei der zentralen Recheneinrichtung 15 kann es sich beispielsweise um einen Cloudserver handeln. Für die jeweilige Fahrsituation relevante Ausschnitte aus der digitalen Straßenkarte 8 können dann über eine drahtlose Kommunikationsschnittstelle 16 an das Fahrzeug 1 übertragen werden. Generell wäre es auch denkbar die digitale Straßenkarte 8 im Navigationssystem 4 oder der Recheneinheit 3 vorzuhalten.

In einem Schritt 101 erfolgt ein Kartendownload, also das Übertragen der relevanten Kartenausschnitte in das Fahrzeug 1. Das Fahrzeug 1 bestimmt mit Hilfe des Navigationssystems 4 seinen aktuellen Aufenthaltsort in Form einer in Figur 2 gezeigten GNSS-Position 5. Mit Hilfe der Umfeldsensorik 6 erfasst zudem das Fahrzeug 1 sein Umfeld und ermittelt aus entsprechenden Sensordaten Straßenattribute. Dabei erfolgt im Schritt 102 eine Sensorfusion mehrerer Komponenten der Umfeldsensorik.

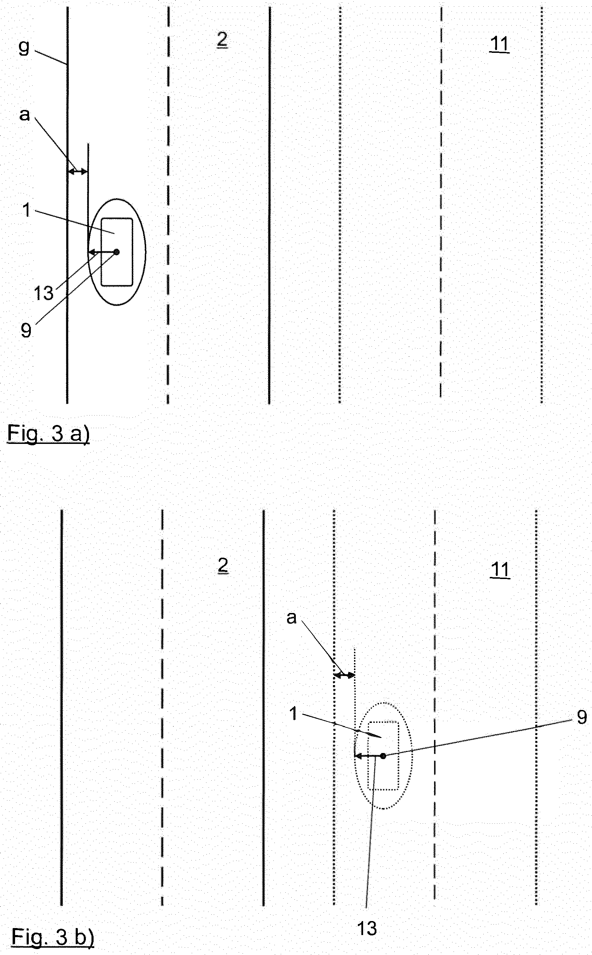

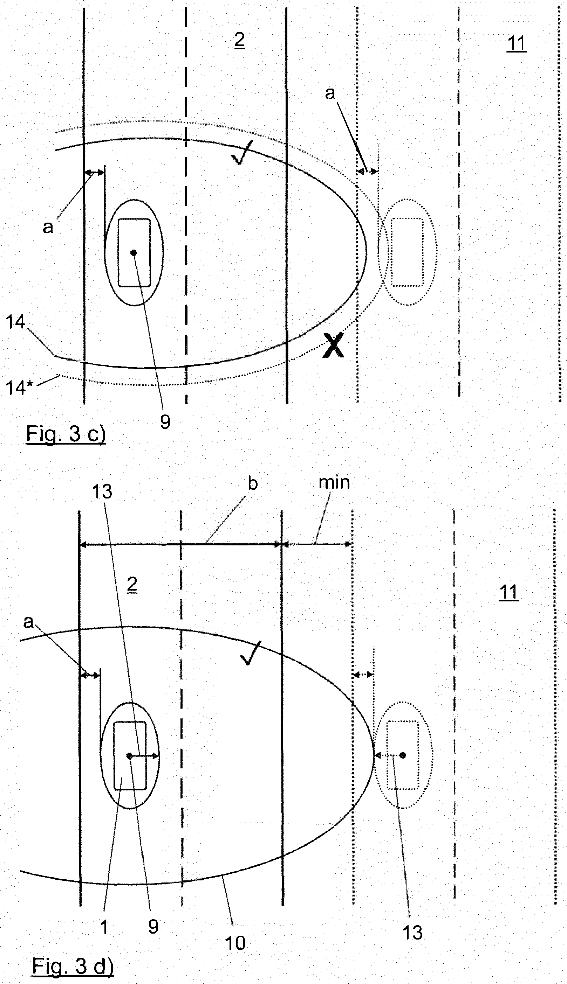

Die Schritte des erfindungsgemäßen Verfahrens werden zusammengefasst in einer Box 103 ausgeführt. Zuerst ermittelt das Fahrzeug 1 in der digitalen Straßenkarte 8 in Übereinkunft mit der GNSS-Position 5, welche in Figur 2 gezeigte Straße 2 befahren wird. Danach lädt die Recheneinheit 3 die in der digitalen Straßenkarte 8 für die respektive Straße 2 hinterlegten Straßenattribute. Anschließend wird eine in Figur 3 gezeigte Querposition 9 für das Fahrzeug 1 auf der Straße 2 durch einen Abgleich der aus der digitalen Straßenkarte 8 ausgelesenen Straßenattributen und den aus der Erfassung des Umfelds mittels der Umfeldsensorik 6 abgeleiteten Straßenattribute ermittelt. Hierzu kann beispielsweise der laterale Abstand des Fahrzeugs 1 zu einer jeweiligen Fahrspurmarkierung abgeglichen werden. Darauf aufbauend wird ein maximal zulässiger GNSS-Fehler 10, welcher in Figur 3c) dargestellt ist, berechnet. Dabei wird der maximal zulässige GNSS-Fehler 10 derart bestimmt, dass unter Berücksichtigung der ermittelten Querposition 9 ein Aufenthalt des Fahrzeugs 1 auf einer in den Figuren 2 und 3 gezeigten möglichen Parallelstraße 11 der Straße 2 ausgeschlossen wird. Anschließend wird derjenige GNSS-Integritätsmonitor aus einer Konfigurationsliste konfiguriert bzw. aktiviert, dessen in Figur 2 gezeigter tolerierter GNSS-Fehler 12 maximal so groß ist wie der maximal zulässige GNSS-Fehler 10.

In Schritt 104 gibt der entsprechende GNSS-Integritätsmonitor durch einen Vergleich des in Figur 2 gezeigten aktuell vorliegenden GNSS-Fehlers 14 mit dem für den konfigurierten GNSS-Integritätsmonitor geltenden tolerierten GNSS-Fehler 12 ein Steuersignal aus. Dieses kann als Freigabesignal oder Sperrsignal verstanden werden und dient dazu in Abhängigkeit der jeweiligen Fahrsituation eine Fahrzeugfunktion bzw. Fahrerassistenzfunktion 105 freizuschalten oder zu sperren.

Als weiteres Sicherheitsmerkmal kann das Fahrzeug 1 einen Schritt 106 ausführen. Im Schritt 106 bestimmt das Fahrzeug 1 durch die Analyse von der Umfeldsensorik 6 generierter Daten charakteristische Umgebungsmerkmale. Dies ermöglicht es durch einen Zugriff auf eine Datenbank, in der entsprechende Umgebungsmerkmale ortsspezifisch gespeichert sind, den Aufenthaltsort des Fahrzeugs 1 zu validieren. So wird die Relativposition des Fahrzeugs 1 gegenüber den erkannten Umgebungsmerkmalen ermittelt und mit der GNSS-Position 5 bzw. der Querposition 9 abgeglichen. Hierdurch kann der Aufenthalt des Fahrzeugs 1 auf der Straße 2 bzw. real vorhandenen oder hypothetisch angenommenen Parallelstraße 11 validiert bzw. ausgeschlossen werden. Anhand von Figur 2 wird noch einmal die generelle Funktionsweise von GNSS-Integritätsmonitoren veranschaulicht. Dargestellt ist die GNSS-Position 5, an der der Aufenthalt des Fahrzeugs 1 angenommen wird. Da die satellitengestützte Positionsbestimmung fehlerbehaftet ist, kann sich das Fahrzeug 1 tatsächlich an jeder erdenklichen Position innerhalb des Aufenthaltswahrscheinlichkeitsbereichs 7 befinden. Entsprechend der sich aus dem Vergleich der Straßenattribute ergebenden Querposition 9 könnte sich das Fahrzeug 1 nicht an der GNSS-Position 5 sondern auch an einer mit einem Sternchen 17 markierten Stelle auf einer real vorhandenen oder potenziell angenommenen Parallelstraße 11 der Straße 2 befinden. Um dies auszuschließen, ist einem jeweiligen GNSS-Integritätsmonitor besagter tolerierte GNSS-Fehler 12 zugeordnet. Der tolerierte GNSS-Fehler 12 kann auch als sogenanntes Alert-Limit bezeichnet werden. Der Aufenthaltswahrscheinlichkeitsbereich 7 deckt sich mit dem aktuell vorliegenden GNSS-Fehler 14. Bei dem in Figur 2 gezeigten Ausführungsbeispiel ist der aktuell vorliegende GNSS-Fehler 14 größer als der tolerierte GNSS-Fehler 12, sodass hier der eingestellte GNSS-Integritätsmonitor ein negatives Ergebnis bzw. den Wert "Ungültig" ausgeben würde. Figur 2 verdeutlicht, dass zur Vermeidung der Annahme des Aufenthalts des Fahrzeugs 1 auf der Parallelstraße 11 das Alert-Limit vergleichsweise klein ausfallen muss. Dies erfordert die Integration aufwändiger und kostenintensiver Hardwarekomponenten im Fahrzeug 1.

Mit Hilfe des erfindungsgemäßen Verfahrens lässt sich ein GNSS-Integritätsmonitor verwenden, der einen größeren tolerierten GNSS-Fehler 12 aufweist. Hierdurch kann öfter ein positives Ergebnis vom GNSS-Integritätsmonitor geliefert werden. Figur 3 dient dabei zur Veranschaulichung, wie der zur Auswahl des entsprechenden GNSS-Integritätsmonitors benötigte maximal zulässige GNSS-Fehler 10 ermittelt wird.

Figur 3a) zeigt die Straße 2 sowie eine hypothetisch daneben verlaufende Parallelstraße 11. Bei dem in Figur 3 gezeigten Ausführungsbeispiel befindet sich eine entsprechende Parallelstraße 11 rechts neben der Straße 2. Es wäre auch denkbar, dass eine Parallelstraße 11 zusätzlich oder alternativ links von der Straße 2 verlaufen würde. Die Parallelstraße 11 könnte dabei in der digitalen Straßenkarte 8 hinterlegt sein oder auch nicht.

Das Fahrzeug 1 ermittelt in Übereinkunft mit der GNSS-Position 5 die entsprechende befahrene Straße 2. Der Straße 2 zugeordnete Straßenattribute werden aus der digitalen Straßenkarte 8 ausgelesen. Hierdurch kann beispielsweise die Straßenbreite b, die Fahrspuranzahl, der Verlauf von Fahrbahnmarkierungen, insbesondere Fahrspurmarkierungen, und dergleichen ermittelt werden. Diese Größen werden ebenfalls durch Auswertung von der Umfeldsensorik 6 generierter Sensordaten ermittelt. Durch eine Analyse von Kamerabildern und/oder von einem LiDAR generierter Sensordaten kann das Fahrzeug 1 beispielsweise feststellen, dass ein Abstand a des Fahrzeugs 1 zu einer linken Fahrspurbegrenzung g 50 cm beträgt. Diese merkmalbasierte Positionsbestimmung geht selbst mit einer Ungenauigkeit bzw. einem Messfehler einher. In Figur 3 ist diese Querpositionsgenauigkeit mit dem Bezugszeichen 13 versehen. Mit dieser merkmalbasierten Positionsbestimmung lässt sich die Querposition 9 auffinden. In Figur 3a) ist der Aufenthalt des Fahrzeugs 1 auf der Straße 2 eingezeichnet. Generell besteht jedoch auch die Möglichkeit, dass sich das Fahrzeug 1 nicht auf der Straße 2, sondern auf der Parallelstraße 11 aufhält, was in Figur 3b) angedeutet ist. Dieser Fall muss ausgeschlossen werden.

Zur Ermittlung des in Figur 3d) gezeigten maximal zulässigen GNSS-Fehlers 10 werden nun die Situationen in Figur 3a) und Figur 3b) miteinander verglichen. In Figur 3c) sind zwei unterschiedlich große aktuelle GNSS-Fehler 14 und 14* eingezeichnet. Der aktuelle GNSS-Fehler 14 erlaubt dabei eine eindeutige Verortung des Fahrzeugs 1 auf der Straße 2 und ist durch eine mit einem Häkchen versehene durchgezogene Linie angedeutet. Durch eine Analyse der mittels der Umfeldsensorik erfassten Straßenattribute erkennt die Recheneinheit, dass sich das Fahrzeug 1 ungefähr mittig auf einer linken Fahrspur befindet. Somit kommen nur die beiden in Figur 3c) eingezeichneten Aufenthaltspositionen in Frage. Da der mit dem Häkchen versehene aktuelle GNSS-Fehler 14 so klein ist, dass die Aufenthaltsposition des Fahrzeugs 1 auf der Parallelstraße 11 ausgeschlossen ist, muss ich das Fahrzeug 1 damit auf der Straße 2 befinden. Der gepunktet ausgeführte und mit einem Kreuz markierte aktuelle GNSS-Fehler 14* überschneidet sich mit der die Querpositionsgenauigkeit 13 anzeigenden Ellipse auf der Parallelstraße 11. Somit kann der Aufenthalt des Fahrzeugs 1 auf der Parallelstraße 11 nicht ausgeschlossen werden. Der Grenzfall, ab dem der Aufenthalt auf der Parallelstraße 11 ausgeschlossen werden kann, ist dann erreicht, wenn die den GNSS-Fehler andeutende Ellipse gerade die die Querpositionsgenauigkeit 13 anzeigende Ellipse berührt. Dieser GNSS-Fehler ist in Figur 3d) als maximal zulässiger GNSS-Fehler 10 eingezeichnet.

Figur 3d) verdeutlicht eine mögliche Rechenoperation, um den maximal zulässigen GNSS-Fehler 10 zu ermitteln. Der maximal zulässige GNSS-Fehler 10 ergibt sich durch die Gleichung: Breite b + Mindestabstand min - 2 x der Querpositionsgenauigkeit 13. Als Formel ausgedrückt lautet dies:

$$\Delta GNSS_{max} = b + min - 2 \times i$$

wobei "$\Delta GNSS_{max}$" dem maximal zulässigen GNSS-Fehler 10 entspricht, "b" der Breite b, "min" dem Mindestabstand min und "i" der Querpositionsgenauigkeit 13.

Das erfindungsgemäße Verfahren erlaubt es einen GNSS-Integritätsmonitor mit einem größeren tolerierten GNSS-Fehler 12 zu verwenden. Hierdurch kann die Häufigkeit, mit der entsprechende Fahrerassistenzfunktionen bereitgestellt werden, erhöht werden. Auf die Integration komplexer und teurer Positionsbestimmungsmittel in das Fahrzeug 1 kann somit verzichtet werden.

**Patentansprüche**

1. Verfahren zum Konfigurieren eines GNSS-Integritätsmonitors im Rahmen der Verortung eines Fahrzeugs (1) auf einer Straße (2), wobei eine Recheneinheit (3) durch Analyse einer von einem navigationssatellitengestützten Navigationssystem (4) ermittelten GNSS-Position (5) und von durch eine Erfassung des Umfelds des Fahrzeugs (1) mit einer fahrzeugeigenen Umfeldsensorik (6) ermittelten Straßenattributen ein Aufenthaltswahrscheinlichkeitsbereich (7) für das Fahrzeug (1) auf der Straße (2) bestimmt,
mit folgenden Verfahrensschritten:

- ermitteln einer vom Fahrzeug (1) befahrenen Straße (2) in einer digitalen Straßenkarte (8) in Übereinkunft mit der GNSS-Position (5);
- laden der in der digitalen Straßenkarte (8) der respektiven Straße (2) zugeordneten Straßenattributen;
- Ermitteln einer Querposition (9) des Fahrzeugs (1) auf der Straße (2) durch einen Abgleich der aus der digitalen Straßenkarte (8) ausgelesenen Straßenattributen und den aus der Erfassung des Umfelds mittels der Umfeldsensorik (6) abgeleiteten Straßenattributen;
- Berechnen eines maximal zulässigen GNSS-Fehlers (10) derart, dass unter Berücksichtigung der ermittelten Querposition (9) ein Aufenthalt des Fahrzeugs (1) auf einer möglichen Parallelstraße (11) ausschließbar ist; und
- Einstellen eines zulässigen GNSS-Integritätsmonitors für die Recheneinheit (3), wobei derjenige GNSS-Integritätsmonitor aus einer in der Recheneinheit (3) vorgehaltenen Konfigurationsliste verfügbarer GNSS-Integritätsmonitore ausgewählt wird, dessen tolerierter GNSS-Fehler (12) maximal so groß ist wie der maximal zulässige GNSS-Fehler (10),
**dadurch gekennzeichnet, dass**
- der maximal zulässige GNSS-Fehler (10) berechnet wird durch Addieren der Breite (b) der vom Fahrzeug (1) befahrenen Straße (2) und eines vorgegebenen Mindestabstands (min) zu einer real vorhandenen oder hypothetisch neben der Straße (2) liegenden Parallelstraße (11) und anschließendes Subtrahieren der zweifachen Querpositionsgenauigkeit (13) von dem Ergebnis der Addition, wobei die Querpositionsgenauigkeit (13) die Genauigkeit der Bestimmung der Querposition (9) in Form einer Länge angibt.

2. Verfahren nach Anspruch 1,
**dadurch gekennzeichnet, dass**
die Recheneinheit (3) ein Steuersignal an ein Fahrerassistenzsystem ausgibt, wenn der ermittelte aktuelle GNSS-Fehler (14) größer ist, als der maximal zulässige GNSS-Fehler (10) und/oder der ermittelte aktuelle GNSS-Fehler (14) größer ist, als der vom aktuell konfigurierten GNSS-Integritätsmonitor tolerierte GNSS-Fehler (12).

3. Verfahren nach einem der Ansprüche 1 bis 2,
**dadurch gekennzeichnet, dass**
die Recheneinheit (3) ein Steuersignal an ein Fahrerassistenzsystem ausgibt, wenn keine Querposition (9) ermittelt werden kann oder eine Differenz zwischen der ermittelten GNSS-Position (5) und der Querposition (9) größer ist als ein vorgegebener Schwellenwert.

4. Verfahren nach einem der Ansprüche 1 bis 3,
**dadurch gekennzeichnet, dass**
zumindest eine der folgenden Größen als Straßenattribut berücksichtigt wird:

- wenigstens eine Fahrbahnmarkierung, insbesondere eine Fahrspurmarkierung;
- wenigstens eine Fahrbahnbegrenzung; und/oder
- wenigstens eine für einen im Umfeld des Fahrzeugs (1) erkannten weiteren Verkehrsteilnehmer ermittelte Bewegungstrajektorie.

5. Verfahren nach einem der Ansprüche 1 bis 4,
**dadurch gekennzeichnet, dass**
die Recheneinheit (3) zur Bestimmung des ermittelten aktuellen GNSS-Fehlers (14) die Anzahl der globalen Navigationssatelliten von denen innerhalb einer vom jetzigen Zeitpunkt an rückwärts laufenden ersten Zeitdauer ein Signal empfangen wurde und/oder dem Empfang von GNSS-Korrekturdaten, die nicht älter als eine zweite Zeitdauer sind, berücksichtigt.

6. Verfahren nach einem der Ansprüche 1 bis 5,
**dadurch gekennzeichnet, dass**
die Recheneinheit (3) durch Analyse von mittels der Umfeldsensorik (6) generierter Sensordaten für das Umfeld des Fahrzeugs (1) charakteristische Umgebungsmerkmale bestimmt und diese mit ortsspezifisch in einer Datenbank gespeicherten bekannten Umgebungsmerkmalen abgleicht, um eine für den Aufenthaltsort des Fahrzeugs (1) repräsentative Umgebungsmerkmal-Position zu bestimmen, und die Umgebungsmerkmal-Position zur Validierung oder Widerlegung des Aufenthalts des Fahrzeugs (1) auf einer Parallelstraße (11) oder einer hypothetischen Parallelstraße (11) verwendet.

7. Fahrzeug (1), umfassend ein Navigationssystem (4), eine Umfeldsensorik (6) und eine Recheneinheit (3),
**dadurch gekennzeichnet, dass**
das Navigationssystem (4), die Umfeldsensorik (6) und die Recheneinheit (3) zur Ausführung eines Verfahrens nach einem der Ansprüche 1 bis 6 eingerichtet sind.

## Claims

1. Method for configuring a GNSS integrity monitor in the context of locating a vehicle (1) on a road (2), a computing unit (3) determining a probability of location region (7) for the vehicle (1) on the road (2) by analyzing a GNSS position (5) ascertained by a navigation-satellite-supported navigation system (4) and analyzing road attributes ascertained by capturing the environment of the vehicle (1) by means of an onboard environment sensor system (6),

   which method comprises the following method steps:

   - ascertaining a road (2) on which the vehicle (1) is traveling in a digital road map (8) in accordance with the GNSS position (5);
   - loading the road attributes assigned to the relevant road (2) in the digital road map (8);
   - ascertaining a lateral position (9) of the vehicle (1) on the road (2) by comparing the road attributes read out from the digital road map (8) and the road attributes derived from capturing the environment by means of the environment sensor system (6);
   - calculating a maximum permissible GNSS error (10) such that, taking into account the ascertained lateral position (9), a location of the vehicle (1) on a possible parallel road (11) can be ruled out; and
   - adjusting a permissible GNSS integrity monitor for the computing unit (3), the GNSS integrity monitor being selected from a configuration list of available GNSS integrity monitors held in the computing unit (3), the tolerated GNSS error (12) of which GNSS integrity monitor is at most as large as the maximum permissible GNSS error (10),

   **characterized in that**

   - the maximum permissible GNSS error (10) is calculated by adding the width (b) of the road (2) on which the vehicle (1) is traveling and a specified minimum distance (min) to an actually existing or hypothetical parallel road (11) next to the road (2) and subsequently subtracting two times the lateral position accuracy (13) from the result of the addition, the lateral position accuracy (13) indicating the accuracy of the determination of the lateral position (9) in the form of a length.

2. Method according to claim 1,
   **characterized in that**
   the computing unit (3) outputs a control signal to a driver assistance system when the ascertained current GNSS error (14) is greater than the maximum permissible GNSS error (10) and/or the ascertained current GNSS error (14) is greater than the tolerated GNSS error (12) tolerated by the currently configured GNSS integrity monitor.

3. Method according to any of claims 1 to 2,
   **characterized in that**
   the computing unit (3) outputs a control signal to a driver assistance system when no lateral position (9) can be ascertained or a difference between the ascertained GNSS position (5) and the lateral position (9) is greater than a specified threshold value.

4. Method according to any of claims 1 to 3,
   **characterized in that**
   at least one of the following variables is taken into account as the road attribute:

   - at least a road marking, in particular a lane marking;
   - at least a lane boundary and/or
   - at least a movement trajectory ascertained for a further road user detected in the environment of the vehicle (1).

5. Method according to any of claims 1 to 4,
   **characterized in that**
   in order to determine the ascertained current GNSS error (14), the computing unit (3) takes into account the number of global navigation satellites from which a signal was received within a first period of time running backwards from the present time and/or the receipt of GNSS correction data which are not older than a second period of time.

6. Method according to any of claims 1 to 5,
   **characterized in that**
   the computing unit (3) determines characteristic surroundings features for the environment of the vehicle (1) by analyzing sensor data generated by means of the environment sensor system (6) and compares these characteristic surroundings features with known surroundings features stored in a location-specific manner in a database in order to determine a surroundings feature position representative of the location of the vehicle (1), and uses the surroundings feature position to validate or invalidate the location of the vehicle (1) on a parallel road (11) or on a hypothetical parallel road (11).

7. Vehicle (1) comprising a navigation system (4), an environment sensor system (6) and a computing unit (3),

**characterized in that**

the navigation system (4), the environment sensor system (6) and the computing unit (3) are designed to carry out a method according to any of claims 1 to 6.

**Revendications**

1. Procédé pour la configuration d'un moniteur d'intégrité GNSS dans le cadre de la localisation d'un véhicule (1) sur une route (2), dans lequel une unité de calcul (3) définit, par analyse d'une position GNSS (5) déterminée par un système de navigation (4) assisté par des satellites de navigation et d'attributs de route déterminés par une détection de l'environnement du véhicule (1) avec un système de capteurs d'environnement (6) propre au véhicule, une plage de probabilité de séjour (7) pour le véhicule (1) sur la route (2), comportant les étapes de procédé suivantes :

   - détermination d'une route (2) empruntée par le véhicule (1) sur une carte routière numérique (8) en accord avec la position GNSS (5) ;
   - chargement des attributs de route associés à la route (2) respective dans la carte routière numérique (8) ;
   - détermination d'une position transversale (9) du véhicule (1) sur la route (2) en comparant les attributs de route lus à partir de la carte routière numérique (8) et les attributs de route déduits de la détection de l'environnement au moyen du système de capteurs d'environnement (6) ;
   - calcul d'une erreur GNSS maximale admissible (10) de telle sorte que, en tenant compte de la position transversale (9) déterminée, un séjour du véhicule (1) sur une route parallèle (11) possible peut être exclu ; et
   - réglage d'un moniteur d'intégrité GNSS admissible pour l'unité de calcul (3), dans lequel ledit moniteur d'intégrité GNSS est sélectionné dans une liste de configuration de moniteurs d'intégrité GNSS disponibles, conservée dans l'unité de calcul (3), dont l'erreur GNSS tolérée (12) est au maximum aussi grande que l'erreur GNSS maximale admissible (10),

   **caractérisé en ce que**

   - l'erreur GNSS maximale admissible (10) est calculée en additionnant la largeur (b) de la route (2) empruntée par le véhicule (1) et une distance minimale (min) prédéfinie par rapport à une route parallèle (11) existant réellement ou se trouvant hypothétiquement à côté de la route (2) et en soustrayant ensuite du résultat de l'addition le double de la précision de la position transversale (13), dans lequel la précision de la position transversale (13) indique la précision de la définition de la position transversale (9) sous forme d'une longueur.

2. Procédé selon la revendication 1,
   **caractérisé en ce que**
   l'unité de calcul (3) transmet un signal de commande à un système d'aide à la conduite lorsque l'erreur GNSS actuelle déterminée (14) est supérieure à l'erreur GNSS maximale admissible (10) et/ou lorsque l'erreur GNSS actuelle déterminée (14) est supérieure à l'erreur GNSS (12) tolérée par le moniteur d'intégrité GNSS actuellement configuré.

3. Procédé selon l'une des revendications 1 à 2,
   **caractérisé en ce que**
   l'unité de calcul (3) transmet un signal de commande à un système d'aide à la conduite lorsqu'aucune position transversale (9) ne peut être déterminée ou lorsqu'une différence entre la position GNSS (5) déterminée et la position transversale (9) est supérieure à une valeur seuil prédéfinie.

4. Procédé selon l'une des revendications 1 à 3,
   **caractérisé en ce que**
   au moins l'une des grandeurs suivantes est utilisée comme attribut de route :

   - au moins un marquage de chaussée, en particulier un marquage de voie de circulation ;
   - au moins une bordure de chaussée ; et/ou
   - au moins une trajectoire de déplacement déterminée pour un autre usager de la route détecté dans l'environnement du véhicule (1).

5. Procédé selon l'une des revendications 1 à 4,
   **caractérisé en ce que**
   l'unité de calcul (3) prend en compte, pour la définition de l'erreur GNSS actuelle déterminée (14), le nombre de satellites de navigation globaux desquels un signal a été reçu pendant une première période de temps s'écoulant à rebours à partir de l'instant présent et/ou la réception de données de correction GNSS qui ne sont pas plus anciennes qu'une seconde période de temps.

6. Procédé selon l'une des revendications 1 à 5,
   **caractérisé en ce que**
   l'unité de calcul (3) définit, par analyse de données de capteurs générées au moyen du système de capteurs d'environnement (6), des caractéristiques d'environnement caractéristiques pour l'environnement du véhicule (1) et compare celles-ci à des caractéristiques d'environnement connues spécifiques au lieu et mémorisées dans une base de données, afin de définir une position de caractéristiques d'environnement représentant le lieu de séjour du véhicule (1), et utilise la position de caractéristiques d'environnement pour valider ou réfuter le séjour du véhicule (1) sur une route parallèle (11) ou une route parallèle (11) hypothétique.

7. Véhicule (1), comprenant un système de navigation (4), un système de capteurs d'environnement (6) et

une unité de calcul (3),
**caractérisé en ce que**
le système de navigation (4), le système de capteurs d'environnement (6) et l'unité de calcul (3) sont configurés pour la mise en œuvre d'un procédé selon l'une des revendications 1 à 6.

EP 4 713 643 B1

Fig. 1

Fig. 2

13

Fig. 3 a)

Fig. 3 b)

Fig. 3 c)

Fig. 3 d)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102019200423 A1
- EP 3839568 A1

- US 20090228204 A1
- US 20210215503 A1

**In der Beschreibung aufgeführte Nicht-Patentliteratur**

- Integrity Monitoring of GNSS/INS Based Positioning Systems for Autonomous Vehicles: State-of-the-Art and Open Challenges. **JING HAO et al.** IEEE TRANSACTIONS ON INTELLIGENT TRANSPORTATION SYSTEMS. IEEE, 01 September 2022, vol. 23, 14166-14187